Europäisches Patentamt

European Patent Office

Office européen des brevets

(19)

(11)  **EP 0 997 362 B1**

(12)  **EUROPÄISCHE PATENTSCHRIFT**

(45) Veröffentlichungstag und Bekanntmachung des Hinweises auf die Patenterteilung:
**04.01.2006  Patentblatt 2006/01**

(51) Int Cl.:
*B60T 8/00* *(2006.01)*

(21) Anmeldenummer: **99117100.0**

(22) Anmeldetag: **31.08.1999**

(54) **Verfahren zur Regelung des Fahrverhaltens eines Fahrzeuges**

Procedure for controlling the vehicle travel behaviour

Procédé pour régler le comportement de roulement d'un véhicule

(84) Benannte Vertragsstaaten:
**DE FR NL SE**

(30) Priorität: **27.10.1998  DE 19849508**

(43) Veröffentlichungstag der Anmeldung:
**03.05.2000  Patentblatt 2000/18**

(73) Patentinhaber: **WABCO GmbH & CO. OHG**
**30453 Hannover (DE)**

(72) Erfinder:
• **Franke, Torsten**
**30459 Hannover (DE)**
• **Gläbe, Klaus**
**30161 Hannover (DE)**
• **Koschorek, Ralf**
**30952 Ronnenberg (DE)**
• **Reich, Thomas**
**30451 Hannover (DE)**

(74) Vertreter: **Schrödter, Manfred**
**WABCO GmbH & Co. OHG**
**Postfach 91 12 62**
**30432 Hannover (DE)**

(56) Entgegenhaltungen:
**DE-A- 4 419 650       DE-A- 19 515 051**
**DE-A- 19 754 898     US-A- 4 898 431**

## Beschreibung

Die Erfindung betrifft ein Verfahren zur Regelung des Fahrverhaltens eines Fahrzeuges gemäß dem Oberbegriff des Patentanspruchs 1.

Ein Verfahren zur Regelung des Fahrverhaltens eines Fahrzeuges ist aus der DE 195 15 051 A1 bekannt.

Das bekannte Verfahren, das auch als Verfahren zur Fahrdynamikregelung bezeichnet wird, sieht vor, daß bei instabilem Fahrverhalten, z. B. Schleudern bzw. starkes Übersteuern oder Untersteuern, durch Betätigung einzelner Radbremsen an einem Kraftfahrzeug ein Zusatzgiermoment aufgebracht wird, welches für eine Stabilisierung des Fahrverhaltens sorgen soll.

Bei dem bekannten Verfahren wird ein Regelungseingriff erst dann eingeleitet, wenn sich das Fahrzeug bereits in einem instabilen und damit schwer beherrschbaren Zustand befindet. In diesem Zustand kann durch Fehlreaktionen des Fahrers, z. B. durch einen zu großen, einer Schleuderbewegung zu stark entgegenwirkenden Lenkeinschlag, das instabile Fahrverhalten noch weiter gesteigert und damit eine Regelung zur Stabilisierung des Fahrverhaltens erschwert werden.

Aus der US 4,898,431 ist ein Verfahren zur Regelung der Fahrzeugbewegung bekannt, bei dem eine Verbesserung der Fahrstabilität durch die Regelung des Bremsmoments eines Fahrzeugs beispielsweise während einer Kurvenfahrt bewirkt wird. Hierbei wird die Fahrstabilität verbessert, indem das Bremsmoment unabhängig von der sensierten Gierrate geregelt wird.

Der Erfindung liegt daher die Aufgabe zugrunde, ein weiter verbessertes Verfahren zur Regelung des Fahrverhaltens eines Fahrzeuges anzugeben, welches auch einem ungeübten Fahrer ermöglicht, das Fahrzeug insbesondere bei Kurvenfahrt sicher zu beherrschen.

Diese Aufgabe wird durch die in dem Patentanspruch 1 angegebene Erfindung gelöst. Vorteilhafte Weiterbildungen der Erfindung sind in den Unteransprüchen angegeben.

Der Erfindung gemäß Patentanspruch 1 liegt die Überlegung zugrunde, daß ein in einer Kurve fahrendes Fahrzeug, welches eine lenkbare Achse aufweist, an den Rädern dieser lenkbaren Achse infolge des Lenkeinschlags relativ große Seitenführungskräfte übertragen muß, während an einer nicht lenkbaren Achse wesentlich geringere Seitenführungskräfte übertragen werden. Bei Überschreitung der reibwertbedingten maximalen Seitenführungskraft würde ein derartiges Fahrzeug ohne Anwendung der Erfindung ein sich mit zunehmender Fahrgeschwindigkeit steigerndes untersteuerndes Fahrverhalten aufweisen, d. h. das Fahrzeug würde über die Räder der lenkbaren Achse rutschen. In einem derartigen Zustand wäre allerdings die an den Rädern der nicht gelenkten Achse verfügbare maximale Seitenführungskraft noch nicht ausgenutzt.

Durch Anwendung der Erfindung gemäß Patentanspruch 1 wird bereits bei geringfügig untersteuerndem Fahrverhalten vor dem Auftreten instabiler Fahrsituationen, wie z. B. dem zuvor erwähnten Rutschen über die Räder der lenkbaren Achse, eine gleichmäßigere Aufteilung der Seitenführungskräfte auf die Fahrzeugachsen bewirkt, indem die Radbremse eines kurveninneren Rads, vorzugsweise des Hinterrads, mit einer der jeweiligen Stärke des Untersteuerns angepaßten, relativ geringen Bremskraft beaufschlagt wird. Hierdurch wird ein zusätzliches Giermoment um die Hochachse des Fahrzeuges erzeugt, so daß das Fahrzeug in die Kurve hineingedreht wird und somit die Untersteuertendenz vermindert wird. Hierdurch wird der Fahrer bereits vor dem Auftreten eines schwer beherrschbaren bzw. unbeherrschbaren Fahrzustandes aktiv unterstützt und das Seitenführungsvermögen des gesamten Fahrzeuges durch Anpassen der Schräglaufwinkel an der lenkbaren und einer nicht lenkbaren Achse verbessert.

Gemäß Patentanspruch 1 wird die Abweichung der Ist-Gierwinkelgeschwindigkeit von der Soll-Gierwinkelgeschwindigkeit bestimmt und wenigstens eine Radbremse zur Stabilisierung des Fahrverhaltens mit einer Bremskraft beaufschlagt, die von der zuvor erwähnten Abweichung abgeleitet wird. In vorteilhafter Weise wird von dieser Abweichung für die Regelung nur ein bestimmter Teil ausgewertet, indem eine auf einen zulässigen Wertebereich begrenzte Abweichung bestimmt wird. Der zulässige Wertebereich wird dabei in Abhängigkeit von der Querbeschleunigung des Fahrzeuges festgelegt. Da der Fahrer mittels der Lenkung auch solche Soll-Gierwinkelgeschwindigkeiten vorgeben kann, die aufgrund der physikalischen Gegebenheiten auch bei entsprechender Unterstützung durch Regelungseingriffe nicht vom Fahrzeug auf die Fahrbahn übertragbar sind, sondern statt dessen zu einem unerwünschten instabilen Fahrverhalten führen könnten, wird durch diese Art der Ausgestaltung der Erfindung der vom Fahrer vorgebbare Einfluß auf die Erzeugung eines zusätzlichen Giermoments auf plausible, in der Praxis umsetzbare Werte begrenzt. In besonders vorteilhafter Weise kann die Erfindung sowohl zur Stabilisierung von untersteuerndem Fahrverhalten als auch zur Stabilisierung von übersteuerndem Fahrverhalten angewandt werden.

Die Querbeschleunigung des Fahrzeuges kann hierbei mittels eines geeigneten Sensors gemessen werden oder unter Verwendung anderer, in dem Fahrzeug ermittelter Größen, wie z.B. dem Lenkwinkel und den Drehgeschwindigkeiten der einzelnen Räder in einer dem Fachmann geläufigen Weise berechnet werden.

Durch Anwendung der Erfindung ist das Fahrzeug auch in extremen Fahrsituationen besonders einfach und sicher zu bedienen.

Bei bekannten Verfahren zur Fahrdynamikregelung erfolgt ein Ansprechen der Regelung üblicherweise erst bei einer Untersteuertendenz von etwa -3 Grad/Sekunde, d.h. die Regelung des Fahrverhaltens beginnt, wenn die Ist-Gierwinkelgeschwindigkeit die Soll-Gierwinkelgeschwindigkeit um wenigstens 3 Grad/Sekunde unterschreitet. In diesem Zustand ist das Fahrzeug je nach fahrerischem Können bereits schwer beherrschbar oder unbeherrschbar. In einer vorteilhaften Weiterbildung der Erfindung wird die Regelung des Fahrverhaltens bereits bei einer Untersteuertendenz von etwa -1,5 Grad/Sekunde begonnen, da sich gezeigt hat, daß eine derartige Untersteuertendenz auch von einem ungeübten Fahrer noch zu bewältigen ist.

Gemäß einer weiteren vorteilhaften Weiterbildung der Erfindung wird der zulässige Wertebereich für die für die Regelung ausgewertete Abweichung zwischen der Soll-Gierwinkelgeschwindigkeit und der Ist-Gierwinkelgeschwindigkeit um einen von einer berechneten Schwimmwinkelgeschwindigkeit, d.h. der Abweichung der Ist-Gierwinkelgeschwindigkeit von einer aufgrund der Querbeschleunigung eigentlich zu erwartenden Gierwinkelgeschwindigkeit, abhängigen Wert verschoben. Die Verschiebung erfolgt vorzugsweise in der Art, daß von dem Fahrer vorgegebene Lenkbewegungen "in die richtige Richtung", also solche Lenkbewegungen, die durch eine Verringerung des Schwimmwinkels zu einer Stabilisierung des Fahrverhaltens im Sinne einer Verringerung der Abweichung zwischen Soll-Gierwinkelgeschwindigkeit und Ist-Gierwinkelgeschwindigkeit beitragen, zu einer Vergrößerung der für diesen Fall relevanten Grenze des zulässigen Wertebereichs führen. Lenkbewegungen "in die falsche Richtung" bewirken dagegen eine Verkleinerung der hierfür relevanten Grenze des zulässigen Wertebereichs. Durch die Verschiebung des zulässigen Wertebereichs wird somit in einfacher Weise sowohl die eine Grenze vergrößert als auch die andere Grenze verkleinert. Mit anderen Worten, es kann z. B. bei einer Lenkbewegung "in die richtige Richtung" infolge der Verschiebung des zulässigen Wertebereichs die Radbremse des kurveninneren Hinterrades mit einer größeren Bremskraft beaufschlagt werden als bei falscher oder gar keiner Lenkbewegung. Hierdurch wird dem Fahrer zusätzlich ein sicheres Fahrgefühl vermittelt.

Die Erfindung wird im folgenden anhand eines Ausführungsbeispiels unter Zuhilfenahme einer Zeichnung näher erläutert.

Es zeigt

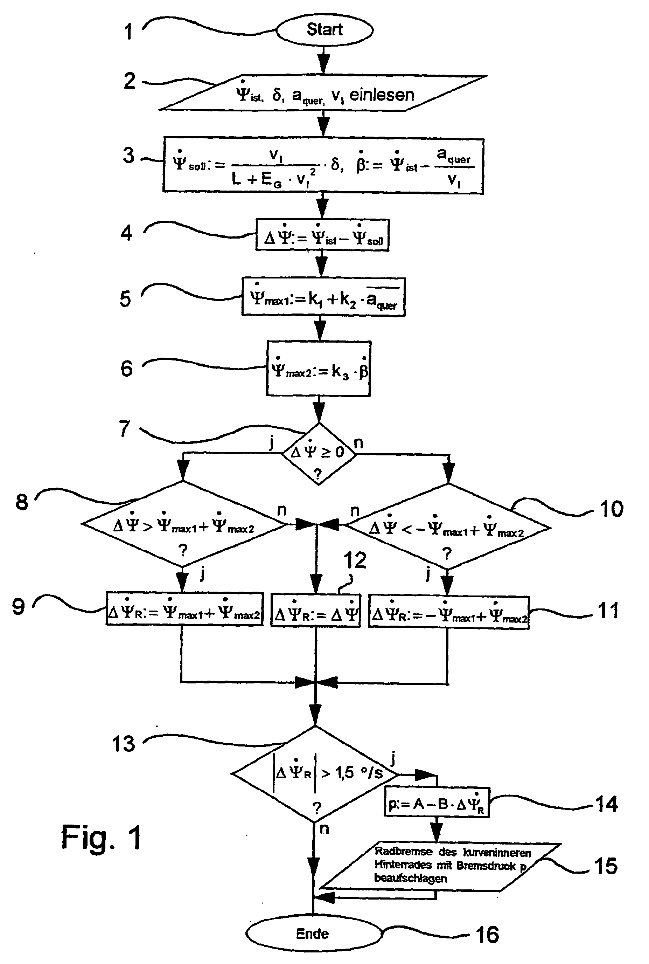

Fig. 1 eine schematische Darstellung des erfindungsgemäßen Verfahrens als Flußdiagramm.

Es wird im folgenden angenommen, daß das nachfolgend beschriebene Verfahren in einem Fahrzeug mit folgender Ausstattung verwendet wird:

- Es ist wenigstens ein Gierwinkelgeschwindigkeitssensor zur Messung der Ist-Gierwinkelgeschwindigkeit ($\dot{\psi}_{ist}$) des Fahrzeuges vorhanden. Als Gierwinkelgeschwindigkeit wird hierbei die Drehung des Fahrzeuges um seine Hochachse pro Zeiteinheit verstanden.

- Weiterhin ist ein Lenkwinkel-Sensor zur Messung des von dem Fahrer eingestellten Lenkwinkels ($\delta$) vorhanden. Als Lenkwinkel wird hierbei nicht der Lenkrad-Drehwinkel verstanden, sondern die Winkelabweichung lenkbarer Räder von einer Parallelen zur Fahrzeuglängsachse.

- Außerdem ist ein Geschwindigkeitssensor zur Ermittlung der Fahrzeuglängsgeschwindigkeit ($v_1$), d.h. der Geschwindigkeit in Fahrtrichtung, vorhanden. Es ist auch möglich, daß die Fahrzeuglängsgeschwindigkeit ($v_1$) rechnerisch aus den Signalen von Raddrehgeschwindigkeitssensoren, wie sie z. B. für Antiblokkiersysteme verwendet werden, als sogenannte Referenzgeschwindigkeit bestimmt wird. Ein entsprechendes Verfahren ist z. B. in der DE 40 16 668 C2 beschrieben.

- Des weiteren ist ein Querbeschleunigungssensor zur Ermittlung der Querbeschleunigung ($a_{quer}$) des Fahrzeuges vorgesehen.

Außerdem weist das Fahrzeug eine Bremsanlage mit druckmittelbetätigbaren Radbremsen an jedem Rad auf, welche bei Beaufschlagung mit einem Bremsdruck (p) eine Bremskraft auf das ihnen zugeordnete Rad ausüben. Statt durch Druckmittel können die Radbremsen auch durch ein elektrisches Betätigungsorgan, z. B. einen Elektromotor, betätigbar sein.

Zur Verarbeitung der Sensorsignale und zur Erzeugung von Ansteuersignalen für die Radbremsen ist außerdem ein elektronisches Steuergerät vorgesehen, welches das erfindungsgemäße Verfahren als Teil verschiedener, als Steuerprogramm ausgebildeter Regelalgorithmen zur Vermeidung unerwünschter Fahrzustände wie Untersteuern, Übersteuern bzw. Schleudern, ausführt. Ein mit derartigen Komponenten ausgestattetes Fahrzeug wird auch als fahrstabilitätsgeregeltes Fahrzeug bezeichnet.

Das Verfahren gemäß Fig. 1 wird in dem elektronischen Steuergerät als Teil eines Steuerprogramms zyklisch ausgeführt. Es beginnt mit dem Block (1). In einem darauf folgenden Datentransferblock (2) werden die von den zuvor beschriebenen Sensoren ermittelten Größen Ist-Gierwinkelgeschwindigkeit ($\dot{\psi}_{ist}$), Lenkwinkel ($\delta$), Querbeschleunigung

($a_{quer}$) und Fahrzeuglängsgeschwindigkeit ($v_1$) eingelesen.

Daraufhin werden in einem Zuweisungsblock (3) die Soll-Gierwinkelgeschwindigkeit ($\dot{\psi}_{soll}$) sowie die Schwimmwinkelgeschwindigkeit ($\dot{\beta}$) aus den zuvor eingelesenen Größen ($\delta$, $a_{quer}$, $v_1$) und weiteren fahrzeugspezifischen Größen gemäß folgenden Formeln berechnet:

$$\dot{\psi}_{soll} := \frac{v_1}{L + E_G \cdot v_1^2} \cdot \delta \qquad [1]$$

$$\dot{\beta} := \dot{\psi}_{ist} - \frac{a_{quer}}{v_1} \qquad [2]$$

Hierbei sind L und EG von der Fahrzeuggeometrie abhängige Größen, wobei L den Radstand und EG den Eigenlenkgradienten angibt. Der Eigenlenkgradient ist für die hier betrachteten Fahrsituationen eine Fahrzeugkonstante, die für ein zweiachsiges Fahrzeug gemäß folgender Beziehung bestimmt werden kann:

$$E_G := \frac{m_{Fzg} \cdot (C_h \cdot L_h - C_v \cdot L_v)}{L \cdot C_v \cdot C_h} \qquad [3]$$

Hierbei bezeichnet $m_{Fzg}$ die Fahrzeugmasse, $L_h$ den Abstand der Hinterachse vom Fahrzeugschwerpunkt, $L_v$ den Abstand der Vorderachse vom Fahrzeugschwerpunkt, $C_v$ die Schräglaufsteifigkeit der Vorderachse und $C_h$ die Schräglaufsteifigkeit der Hinterachse. Diese Größen sind fahrzeugspezifisch durch Versuche zu ermitteln. Bezüglich der näheren Definition der zuvor genannten Größen sei auf die Norm DIN 77000 vom Januar 1994 verwiesen.

In einem Zuweisungsblock (4) wird die Abweichung zwischen der Ist-Gierwinkelgeschwindigkeit ($\dot{\psi}_{ist}$) und der Soll-Gierwinkelgeschwindigkeit ($\dot{\psi}_{soll}$) durch Differenzbildung als Differenz-Gierwinkelgeschwindigkeit ($\Delta\dot{\psi}$) bestimmt:

$$\Delta\dot{\psi} := \dot{\psi}_{ist} - \dot{\psi}_{soll} \qquad [4]$$

Unter Verwendung der so bestimmten Differenz-Gierwinkelgeschwindigkeit ($\Delta\dot{\psi}$) wird in einer im folgenden noch näher beschriebenen Weise die Stärke des Regelungseingriffs zur Verminderung des untersteuernden Fahrverhaltens festgelegt. Da, wie zuvor bereits erwähnt, aufgrund physikalischer Gegebenheiten des Fahrzeuges und der Fahrbahn nur ein bestimmter Maximalbetrag der Gierwinkelgeschwindigkeit bei stabilem Fahrverhalten realisierbar ist, ist es demzufolge erwünscht, daß der aufgrund der Differenz-Gierwinkelgeschwindigkeit ($\Delta\dot{\psi}$) festgelegte Regelungseingriff nicht zu einer Überschreitung dieses Maximalbetrages der Gierwinkelgeschwindigkeit führt, d. h. es dürfen nicht beliebig große Betragswerte der Differenz-Gierwinkelgeschwindigkeit ($\Delta\dot{\psi}$) für den Regelungseingriff herangezogen werden. Aus diesem Grund wird ein zulässiger Wertebereich ($-\dot{\psi}_{max1}$, $\dot{\psi}_{max1}$) festgelegt, deren oberer und unterer Grenzwert betragsmäßig gleich sind.

In einem Zuweisungsblock (5) wird der betragsmäßige Grenzwert ($\dot{\psi}_{max1}$) gemäß folgender Formel berechnet:

$$\dot{\psi}_{max1} := k_1 - k_2 \cdot \overline{a_{quer}} \qquad [5]$$

Hierbei stellen die Konstanten ($k_1$, $k_2$) fahrzeugspezifische Größen dar, die jeweils durch Versuche zu ermitteln sind. Geeignete Werte sind beispielsweise $k_1$ = 5 Grad/Sekunde und $k_2$ = 0,3 Grad.Sekunde/Meter. Die Größe

$(\overline{a_{quer}})$ stellt einen durch zeitliche Mittelwertbildung gewonnenen mittleren Wert der Querbeschleunigung ($a_{quer}$) dar.

Der zulässige Wertebereich ($-\dot{\psi}_{max1}$, $\dot{\psi}_{max1}$) kann, wie bereits erwähnt, in Abhängigkeit von der Schwimmwinkelgeschwindigkeit ($\dot{\beta}$) verschoben werden. Hierfür wird in einem darauffolgenden Zuweisungsblock (6) ein Verschiebungswert ($\dot{\psi}_{max2}$) gemäß folgender Formel berechnet:

$$\dot{\psi}_{max2} := k_3 \cdot \dot{\beta} \qquad\qquad [6]$$

Die Konstante ($k_3$) ist fahrzeugspezifisch festzulegen, z. B. durch Versuche. Ein geeigneter Wert ist $k_3 = 0,25$.

Die resultierenden Grenzen des zulässigen Wertebereichs ergeben sich dann durch Addition des aufgrund der Querbeschleunigung bestimmten Anteils ($-\dot{\psi}_{max1}$, $\dot{\psi}_{max1}$) und des Verschiebungsanteils ($\dot{\psi}_{max2}$) zu einem oberen Grenzwert ($\dot{\psi}_{max1} + \dot{\psi}_{max2}$) und einem unteren Grenzwert ($-\dot{\psi}_{max1} + \dot{\psi}_{max2}$).

In einem Verzweigungsblock (7) wird sodann das Vorzeichen der Differenz-Gierwinkelgeschwindigkeit ($\Delta\dot{\psi}$) geprüft. Bei positivem Vorzeichen, d. h. wenn die Differenz-Gierwinkelgeschwindigkeit ($\Delta\dot{\psi}$) größer oder gleich Null ist, werden die darauffolgenden Blöcke (8, 9 bzw. 12) ausgeführt. Bei negativem Vorzeichen werden dagegen die Blöcke (10, 11 bzw. 12) ausgeführt.

In dem Verzweigungsblock (8) wird geprüft, ob die Differenz-Gierwinkelgeschwindigkeit ($\Delta\dot{\psi}$) den zulässigen Wertebereich, dessen oberer Grenzwert durch den Ausdruck ($\dot{\psi}_{max1} + \dot{\psi}_{max2}$) festgelegt wird, überschreitet. Wenn dies der Fall ist, so wird in einem Zuweisungsblock (9) eine für die Regelung auszuwertende Abweichung ($\Delta\dot{\psi}_R$) auf diesen oberen Grenzwert ($\dot{\psi}_{max1} + \dot{\psi}_{max2}$) gesetzt. Falls der obere Grenzwert ($\dot{\psi}_{max1} + \dot{\psi}_{max2}$) nicht überschritten wird, wird in einem Zuweisungsblock (12) der ursprüngliche Wert der Differenz-Gierwinkelgeschwindigkeit ($\Delta\dot{\psi}$) als für die Regelung auszuwertende Abweichung ($\Delta\dot{\psi}_R$) übernommen. Dann wird zu dem Verzweigungsblock (13) verzweigt.

Bei negativem Vorzeichen der Differenz-Gierwinkelgeschwindigkeit ($\Delta\dot{\psi}$) wird in analoger Weise zu dem zuvor Beschriebenen in dem Verzweigungsblock (10) zunächst geprüft, ob die Differenz-Gierwinkelgeschwindigkeit ($\Delta\dot{\psi}$) den unteren Grenzwert des zulässigen Wertebereichs, der durch den Ausdruck ($-\dot{\psi}_{max1} + \dot{\psi}_{max2}$) festgelegt wird, unterschreitet. Bei einer Unterschreitung wird in einem Zuweisungsblock (11) die für die Regelung auszuwertende Abweichung ($\Delta\dot{\psi}_R$) auf diesen unteren Grenzwert ($-\dot{\psi}_{max1} + \dot{\psi}_{max2}$) gesetzt. Anderenfalls wird ebenfalls zu dem Zuweisungsblock (12) verzweigt, in dem der ursprüngliche Wert der Differenz-Gierwinkelgeschwindigkeit ($\Delta\dot{\psi}$) als für die Regelung auszuwertende Abweichung ($\Delta\dot{\psi}_R$) übernommen wird. Dann wird zu dem Verzweigungsblock (13) verzweigt.

In dem Verzweigungsblock (13) wird dann geprüft, ob eine für den Beginn eines Regeleingriffs ausreichende Untersteuertendenz vorliegt, nämlich ob die für die Regelung auszuwertende Abweichung ($\Delta\dot{\psi}_R$) betragsmäßig einen Wert von 1,5 Grad/Sekunde überschreitet. Wenn dies nicht der Fall ist, so endet das Verfahren mit dem Block (16).

Anderenfalls wird zu dem Zuweisungsblock (14) verzweigt, in dem ein für die Aufbringung eines zusätzlichen, den Fahrer bei der Kurvenfahrt unterstützenden Giermoments entsprechender Bremsdruck (p) aus der für die Regelung auszuwertenden Abweichung ($\Delta\dot{\psi}_R$) bestimmt wird. Die Bestimmung erfolgt nach folgender Formel:

$$p := A - B \cdot \Delta\dot{\psi}_R \qquad\qquad [6]$$

Die Größen (A, B) stellen fahrzeug- bzw. bremsanlagenspezifische Parameter dar, die für ein Fahrzeug bzw. eine Bremsanlage durch Versuche zu ermitteln sind.

In einem Datentransferblock (15) wird der zuvor berechnete Bremsdruck (p) an einen Aktuator zur Betätigung der Radbremse ausgegeben. Hierdurch wird die Radbremse des kurveninneren Hinterrads mit dem Bremsdruck (p) beaufschlagt.

Das Verfahren endet mit dem Block (16).

**Patentansprüche**

1. Verfahren zur Regelung des Fahrverhaltens eines Fahrzeuges, wobei die Abweichung ($\Delta\dot{\psi}$) einer gemessenen Ist-Gierwinkelgeschwindigkeit ($\dot{\psi}_{ist}$) von einer von dem Fahrer des Fahrzeuges beeinflußbaren Soll-Gierwinkelgeschwindigkeit ($\dot{\psi}_{soll}$) bestimmt wird und wenigstens eine Radbremse zur Stabilisierung des Fahrverhaltens mit einer Bremskraft beaufschlagt wird, die von der Abweichung ($\Delta\dot{\psi}$) abgeleitet wird, **dadurch gekennzeichnet, daß** für die Bestimmung der Bremskraft eine für die Regelung auszuwertende Abweichung ($\Delta\dot{\psi}_R$) verwendet wird, die durch Begrenzung der Abweichung ($\Delta\dot{\psi}$) zwischen der Soll-Gierwinkelgeschwindigkeit ($\dot{\psi}_{soll}$) und der Ist-Gierwinkelge-schwindigkeit ($\dot{\psi}_{ist}$) auf einen zulässigen Wertebereich ($-\dot{\psi}_{max1}$, $\dot{\psi}_{max1}$) ermittelt wird, der abhängig von der Querbeschleunigung ($a_{quer}$) des Fahrzeuges festgelegt wird.

2. Verfahren nach Anspruch 1, **dadurch gekennzeichnet, daß** die mit der Bremskraft beaufschlagte Radbremse die Radbremse eines kurveninneren Hinterrades ist.

3. Verfahren nach einem der vorhergehenden Ansprüche, **dadurch gekennzeichnet, daß** die Regelung des Fahrverhaltens beginnt, wenn die Ist-Gierwinkelgeschwindigkeit ($\dot{\psi}_{ist}$) von der Soll-Gierwinkelgeschwindigkeit ($\dot{\psi}_{soll}$) um wenigstens 1,5 Grad/Sekunde abweicht.

4. Verfahren nach einem der vorhergehenden Ansprüche, **dadurch gekennzeichnet, daß** der zulässige Wertebereich ($-\dot{\psi}_{max1}$, $\dot{\psi}_{max1}$) um einen von der Schwimmwinkelgeschwindigkeit ($\dot{\beta}$) abhängigen Wert ($\dot{\psi}_{max2}$) verschoben wird.

5. Verfahren nach einem der vorhergehenden Ansprüche, **dadurch gekennzeichnet, daß** der vom Fahrer des Fahr-zeuges vorgegebene Lenkwinkel ($\delta$) erfaßt wird und unter Verwendung des Lenkwinkels ($\delta$) die Soll-Gierwinkelge-schwindigkeit ($\dot{\psi}_{soll}$) berechnet wird.

**Claims**

1. Method of regulating the driving behaviour of a vehicle, the difference ($\Delta\dot{\Psi}$) of a measured actual yawing angle rate ($\dot{\Psi}_{actual}$) from a desired yawing angle rate ($\dot{\Psi}_{desired}$) controllable by the driver of the vehicle being determined and, to stabilise the driving behaviour, at least one wheel brake being acted upon by a braking force derived from the difference ($\Delta\dot{\Psi}$),
**characterized in that** for determining the braking force, a difference ($\Delta\dot{\Psi}_R$), to be evaluated for the regulation, is used, which difference is ascertained by limiting the difference ($\Delta\dot{\Psi}$) between the desired yawing angle rate ($\dot{\Psi}_{desired}$) and the actual yawing angle rate ($\dot{\Psi}_{actual}$) to an admissible value range ($-\dot{\Psi}_{max1}$, $\dot{\Psi}_{max1}$) which is fixed in dependence upon the transverse acceleration ($a_{transverse}$) of the vehicle.

2. Method according to claim 1, **characterized in that** the wheel brake acted upon by the braking force is the wheel brake of a rear wheel on the inside of a bend.

3. Method according to either one of the preceding claims, **characterized in that** the regulation of the driving behaviour begins when the actual yawing angle rate ($\dot{\Psi}_{actual}$) differs from the desired yawing angle rate ($\dot{\Psi}_{desired}$) by at least 1.5 degrees/second.

4. Method according to any one of the preceding claims, **characterized in that** the admissible value range ($-\dot{\Psi}_{max1}$, $\dot{\Psi}_{max1}$) is shifted by a value ($\dot{\Psi}_{max2}$) that is dependent upon the sideslip angle rate ($\dot{\beta}$).

5. Method according to any one of the preceding claims, **characterized in that** the steering angle ($\delta$) set by the driver of the vehicle is detected and, using the steering angle ($\delta$), the desired yawing angle rate ($\dot{\Psi}_{desired}$) is calculated.

**Revendications**

1. Procédé pour régler le comportement de déplacement d'un véhicule, selon lequel l'écart ($\Delta\dot{\psi}$) d'une vitesse angulaire de lacet réelle mesurée ($\dot{\psi}_{ist}$) est déterminé par une vitesse angulaire de lacet de consigne ($\dot{\psi}_{soll}$) pouvant être influencée par le conducteur du véhicule, et au moins un frein de roue est chargé, pour la stabilisation du comportement de déplacement, par une force de freinage, qui est dérivée de l'écart ($\Delta\dot{\psi}$), **caractérisé en ce que** pour la détermination de la force de freinage, on utilise un écart ($\Delta\dot{\psi}_R$) devant être évalué pour la régulation et qui est déterminé par une limitation de l'écart ($\Delta\dot{\psi}$) entre la vitesse angulaire de lacet de consigne ($\dot{\psi}_{soll}$) et la vitesse angulaire de lacet réelle ($\dot{\psi}_{ist}$) dans une gamme admissible de valeurs ($-\dot{\psi}_{max1}$, $\dot{\psi}_{max1}$), qui est fixée en fonction de l'accélération transversale ($a_{quer}$) du véhicule.

2. Procédé selon la revendication 1, **caractérisé en ce que** le frein de roue, chargé par la force de freinage, est le frein d'une roue arrière située sur le côté intérieur de la courbe.

3. Procédé selon l'une des revendications précédentes, **caractérisé en ce que** la régulation du comportement de déplacement commence lorsque la vitesse angulaire de lacet réelle ($\dot{\psi}_{ist}$) s'écarte d'au moins 1,5 degré/seconde de la vitesse angulaire de lacet de consigne ($\dot{\psi}_{soll}$).

4. Procédé selon l'une des revendications précédentes, **caractérisé en ce que** la gamme admissible de valeurs ($-\dot{\psi}_{max1}$, $\dot{\psi}_{max1}$) est décalée d'une valeur ($\dot{\psi}_{max2}$) qui dépend de la vitesse angulaire de flottement ($\dot{\beta}$).

5. Procédé selon l'une des revendications précédentes, **caractérisé en ce que** l'angle de braquage ($\delta$) prédéterminé par le conducteur du véhicule est détecté et la vitesse angulaire de lacet de consigne ($\dot{\psi}_{soll}$) est calculée en utilisant l'angle de braquage ($\delta$).

Fig. 1

Start

1

2 — $\dot{\Psi}_{ist}$, $\delta$, $a_{quer}$, $v_l$ einlesen

3 — $\dot{\Psi}_{soll} := \dfrac{v_l}{L + E_G \cdot v_l^2} \cdot \delta$, $\dot{\beta} := \dot{\Psi}_{ist} - \dfrac{a_{quer}}{v_l}$

4 — $\Delta\dot{\Psi} := \dot{\Psi}_{ist} - \dot{\Psi}_{soll}$

5 — $\dot{\Psi}_{max1} := k_1 + k_2 \cdot \overline{a_{quer}}$

6 — $\dot{\Psi}_{max2} := k_3 \cdot \dot{\beta}$

7 — $\Delta\dot{\Psi} \geq 0$ ?   j   n

8 — $\Delta\dot{\Psi} > \dot{\Psi}_{max1} + \dot{\Psi}_{max2}$ ?   n

10 — $\Delta\dot{\Psi} < -\dot{\Psi}_{max1} + \dot{\Psi}_{max2}$ ?   n

9 — $\Delta\dot{\Psi}_R := \dot{\Psi}_{max1} + \dot{\Psi}_{max2}$   j

12 — $\Delta\dot{\Psi}_R := \Delta\dot{\Psi}$

11 — $\Delta\dot{\Psi}_R := -\dot{\Psi}_{max1} + \dot{\Psi}_{max2}$   j

13 — $\left|\Delta\dot{\Psi}_R\right| > 1{,}5\ °/s$ ?   j   n

14 — $p := A - B \cdot \Delta\dot{\Psi}_R$

15 — Radbremse des kurveninneren Hinterrades mit Bremsdruck p beaufschlagen

Ende — 16